# EUROPÄISCHE PATENTSCHRIFT

(11) **EP 0 265 908 B1**
(45) Veröffentlichungstag und Bekanntmachung des Hinweises auf die Patenterteilung: **12.05.1993**
(21) Anmeldenummer: 87115771.5
(22) Anmeldetag: 27.10.1987
(51) Int. Cl.: C12C 13/04, F28D 7/12, F28D 7/16

(54) **Würzekochvorrichtung**
Device for boiling wort
Appareil pour l'ébullition du moût

(30) Priorität: 27.10.1986 DE 3636491
(43) Veröffentlichungstag der Anmeldung: 04.05.1988
(73) Patentinhaber: Anton Steinecker Maschinenfabrik GmbH, D-85318 Freising (DE)
(72) Erfinder: Widhopf, Martin, D-8050 Freising-Pulling (DE)
(74) Vertreter: Grünecker, Kinkeldey, Stockmair & Schwanhäusser Anwaltssozietät

(56) Entgegenhaltungen:
- DE-A- 3 012 591
- DE-A- 3 609 870
- DE-B- 2 726 952
- DE-C- 392 286
- FR-A- 1 158 706

## Beschreibung

Die Erfindung betrifft eine Würzekochvorrichtung, die mit Brüdenverdichtung arbeitet, mit einer Würzepfanne und mit zwei getrennten, außerhalb der Würzepfanne gelegenen und von Wärmetauschern gebildeten Heizungskreisläufen, wobei der eine Wärmetauscher (Frischdampfwärmetauscher) zum Aufheizen der Würze mit Frischdampf und der andere Wärmtauscher (Brüdenwärmetauscher) zum anschließenden Kochen den Würze mit verdichteten Brüden gespeist wird.

Es ist in jüngerer Zeit bekannt geworden, bei der beim Brauprozess erforderlichen Kochung der Würze mit sogen. Brüdenverdichtungsanlagen zu arbeiten, bei denen Wärmepumpen dem Energietransport dienen. Dabei handelt es sich um einen offenen Prozeß, wobei die beim Eindampfen der Würze entstehenden Brüden abgesaugt und verdichtet werden. Bei der anschließenden Kondensation gibt der Brüden seine Wärme wieder an die Würze ab und wird als Flüssigkeit aus dem System ausgeschieden.

Durch die direkte Nutzung der Brüdenwärme für den Würzekochprozeß stehen Abwärmeanfall und Wärmebedarf in unmittelbarem Zusammenhang. Dadurch wird eine Beseitigung des Brüden möglich. Eine Zwischenspeicherung der Abwärme erübrigt sich. Der erforderliche Energiebedarf reduziert sich dabei auf den Ausgleich der Abstrahlungsverluste und die zum Wärmetransport erforderliche Arbeit.

Es ist im Stand der Technik außerdem bekannt, das Aufheizen und Kochen der Würze mit zwei getrennten Heizeinrichtungen durchzuführen. In der einen Heizeinrichtung wird die Würze zunächst mit Frischdampf aufgeheizt, während sie dann während des Kochens mit komprimierten Brüden beaufschlagt wird.

Zur Vorheizung der Würze mit Hilfe von Frischdampf hat man bisher entweder mit am Gefäß installierten Heizungen, einem Innen- oder Außenkocher gearbeitet, während die Würze dann aber zum Kochen in jedem Fall durch einen Außenkocher geleitet werden muß, da man mit niedrigen Heizdampfdrücken arbeiten muß, so daß aufgrund der verdichteten Brüden überdurchschnittlich große Heizflächen erforderlich sind.

Aus der DE-AS 27 26 952 ist ein Würzekessel mit Mehrzonenröhrenheizkörper bekannt, der als Innenkocher ausgebildet ist. Die einzelnen Zonen des Kochers können separat mit Dampf beaufschlagt werden, so daß sich aufgrund der unterschiedlichen Höhe unterschiedliche Wärmemengen übertragen lassen.

Das Arbeiten mit zwei getrennten Heizkreisläufen, einmal für Frischdampf und einmal für verdichtete Brüden, hat in erster Linie den Sinn, daß aufgrund der Trennung der Heizkreisläufe das Kondensat des Frischdampfes wiederverwertet werden kann, d.h., eine Verschmutzung des Kessels und Kondensatsystems durch Brüdenbestandteile ist ausgeschlossen.

Bisher bekannte Systeme, die mit zwei getrennten Heizeinrichtungen arbeiten, haben dies dadurch verwirklicht, daß zwei getrennt und nebeneinander angeordnete bzw. hintereinandergeschaltete Außenkocher vorgesehen werden, wobei zunächst in einem ersten Außenkocher die Würze mit Frischdampf aufgewärmt wird. Dann wird die Würze aus dem ersten Außenkocher ausgeleitet und in den zweiten Außenkocher eingeleitet, wo dann zum Kochen mit verdichteten Brüden ein Wärmeaustausch stattfindet. Am unteren Auslauf der beiden Kocher konnten dann die jeweiligen Kondensate, beispielsweise zur Bereitung von Warmwasser, weiterverwendet werden.

Durch das externe Aufheizen und Kochen in zwei getrennten, hintereinanderliegenden Außenkochern ist jedoch der erforderliche Installationsaufwand (Verrohrungen, Isolierungen, Materialaufwand) sowie der Betriebsaufwand (Sicherheitsarmaturen) relativ groß.

Aufgabe der Erfindung ist es daher, eine Würzekochvorrichtung der eingangs genannten Art vorzuschlagen, die einen beträchtlich geringeren Materialherstellungs- und Betriebsaufwand gegenüber den im Stand der Technik bekannten Anlagen mit sich bringt.

Gelöst wird diese Aufgabe bei einer Würzekochvorrichtung der eingangs genannten Art dadurch, daß die beiden Wärmetauscher ineinanderliegend in einem gemeinsamen Außenkocher angeordnet sind.

Das - vorzugsweise konzentrische - Ineinanderlegen der beiden Wärmetauscher in einem gemeinsamen Außenkocher bringt eine ganze Reihe von Vorteilen mit sich. Zunächst entfallen dadurch die bisher benötigten, zwei getrennte Wärmetauscher verbindende Rohrleitungen und damit auch die hierfür erforderlichen Rohrleitungsentlüftungen. Desweiteren wird für den einen Außenkocher nur eine Sicherheitsarmatur benötigt. Bei hintereinander geschalteten Kochern treten Abdichtungsprobleme auf, die nun durch die Erfindung ebenfalls beseitigt sind. Darüber hinaus wird nur ein Fundament und nur eine Abstützvorrichtung erforderlich. Durch Wegfall eines zweiten Außenkochers entfällt damit auch eine Zarge und die erforderliche Isolierung.

Über diese den Herstellungs-, Vorrichtungs- und Platzaufwand betreffenden Vorteile wird durch die Erfindung auch der Frischdampf gezielter und besser einsetzbar, insbesondere kann dadurch in einem Kocher kontinuierlich mit Frisch- und Brüdendampf gekocht werden. Die ineinanderliegende Anordnung der Wärmetauscher in dem einen Außenkocher führt desweiteren zu einem besseren Wirkungsgrad, da Abstrahlverluste des inneren Kochers entfallen.

Eine vorteilhafte Weiterbildung der Erfindung sieht vor, daß der Außenkocher als aufrechtstehender, länglicher Rundbehälter ausgebildet ist, an dessen unterem Ende ein Einlaß und an dessen oberem Ende ein Auslaß für die Würze ausgebildet ist, wobei die Würze auf dem Weg vom Einlaß zum Auslaß mit den Wärmetauscherflächen der beiden Wärmetauscher in Berührung kommt. Mit diesen Maßnahmen durchströmt die ankommende Würze den Außenkocher von unten nach oben und wird dabei durch Vorbeistreichen an den Wärmetauscherflächen aufgeheizt, je nachdem ob mit Frischdampf oder mit verdichtetem Brüdendampf oder mit beidem gearbeitet wird.

Eine weitere Ausgestaltung der Erfindung sieht vor, daß der Behälter in seinem oberen Bereich mit einer ersten, oberen und sich horizontal erstreckenden Trennwand und in seinem unteren Bereich mit einer ersten, unteren und sich horizontal erstreckenden Trennwand versehen ist, wobei die Trennwände einen mittleren Raum begrenzen und daß in den Trennwänden eine Vielzahl von Öffnungen vorhanden sind, wobei jeweils von einer Öffnung in der ersten oberen Trennwand zu einer entsprechenden Öffnung in der ersten unteren Trennwand eine den mittleren Raum durchsetzende Würzeleitung zum Durchtritt der Würze führt.

Die Unterteilung des Behälters mit Trennwänden schafft eine konkrete Möglichkeit, getrennte Heizkreisläufe bzw. die beiden Wärmetauscher getrennt voneinander in einem Außenkocher unterzubringen. Durch die Abtrennung des Behälters derart, daß ein mittlerer Raum entsteht, der von Leitungen durch die Würze hindurchtritt, durchsetzt wird, ergibt sich die Möglichkeit, beispielsweise Brüdendampf im oberen Bereich des mittleren Raumes durch eine seitliche Eintrittsöffnung einzuleiten und dann am unteren Bereich durch eine seitliche Auslaßöffnung in der Form von Brüdenkondensat wieder zu entnehmen. Der Brüdendampf umströmt dabei die Würzeleitungen in diesem mittleren Raum und kann über die obere Trennwand nicht weiter nach oben und über die untere Trennwand nicht weiter nach unten in den Behälter austreten. Auf diese Art und Weise wird ein geschlossener Brüdendampfwärmetauscher in dem Außenkocher verwirklicht.

In weiterer Ausgestaltung der Erfindung wird der zweite Wärmetauscher dadurch erzeugt, daß der Behälter oberhalb der ersten oberen Trennwand mit einer zweiten oberen Trennwand und unterhalb der ersten unteren Trennwand mit einer zweiten unteren Trennwand versehen ist, die beide horizontal verlaufen und daß zwischen korrespondierenden Öffnungen der beiden zweiten Trennwände Frischdampfleitungen verlaufen, die durch den mittleren Raum hindurch in den Würzeleitungen mit kleinerem Durchmesser als diese Würzeleitungen verlaufen.

In diesem Zusammenhang ist es auch von Vorteil, wenn die obere zweite Trennwand oberhalb der Mündung des Auslasses für die Würze und die zweite untere Trennwand unterhalb der Mündung des Einlasses für die Würze verläuft.

Bei einer konkreten Ausgestaltung wird die zweite obere Trennwand und der Würzeeintritt in einem Behälteraufsatz untergebracht, so daß eine einfache Installation der Trennwand möglich ist.

Eine weitere Ausgestaltung sieht vor, daß der Behälter an seinem unteren Ende durch die zweite untere Trennwand abgeschlossen ist, wobei sich an die Trennwand nach unten hin ein Kondensatsammelraum mit einem Kondensatauslaß anschließt. Damit bildet die zweite untere Trennwand zumindest über einen Teil der Behälterbreite den Behälterboden, was ebenfalls zu einer erleichterten Installation dieser Trennwand führt. Nach unten schließt sich dann in der Art eines Ansatzes der Kondensatsammelraum an, in den die Frischdampfleitungen münden. Vom Kondensatsammelraum kann das Kondensat durch einen hierfür vorgesehenen Kondensatauslaß ausfließen, so daß der Frischdampf vom Eintritt bis zum Austritt aus dem Behälter insgesamt nicht mit Brüdenkondensat in Berührung kommt und daher weiterverwendet werden kann.

Eine weitere vorteilhafte Ausgestaltung sieht vor, daß in dem Behälter vertikal gerichtete Leitwände vorhanden sind, die so angeordnet sind, daß sie die Würze auf einem möglichst langen Weg von der Würzeeintrittsöffnung zur Würzeaustrittsöffnung durchlaufen. Dadurch wird die wirksame Aufheiz- und Kochstrecke für die Würze verlängert.

Bei einer konkreten Lösung ist derzeit vorgesehen, daß der Durchmesser der beiden zweiten Trennwände etwa dem halben Durchmesser der beiden ersten Trennwände entspricht und daß der Behälteraufsatz und der Kondensatsammelraum symmetrisch zur Längsmittelachse der Behälter angeordnet sind. Dadurch werden die beiden Wärmetauscher rotationssymmetrisch zur Längsmittelachse angeordnet, so daß sich eine gleichmäßige Einwirkung auf die durchströmende Würze von beiden Wärmetauschern einstellt.

Schließlich ist weiterhin vorgesehen, daß die Würzeleitungen und die Frischdampfleitungen als Rundröhren ausgebildet sind und es ist weiterhin vorgesehen, daß der Boden des Frischdampfkondensatsammelraumes bombiert ist. Auf diese Art und Weise werden Totecken vermieden, und es wird erreicht, daß das Kondensat ohne daß wesentliche Rückstände im Behälter verbleiben, auslaufen kann.

Bei einer anderen erfindungsgemäßen Ausführungsform ist vorgesehen, daß am unteren Ende des Außenkochers ein Ansatz ausgebildet ist, der mit einer zylindrischen Mantelfläche bis zur unteren Trennwand in den Außenkocher hineinragt wobei der Ansatz durch eine obere Zwischenwand und eine untere Zwischenwand horizontal unterteilt und mit einem Frischdampfzulauf und einem Frischdampfkondensatablauf versehen ist.

Bei dieser Lösung findet sowohl die Zufuhr des Frischdampfes als auch das Abführen des Frischdampfkondensats am unteren Behälterende statt. Hierzu dient ein entsprechend ausgebildeter Ansatz, der mit zwei Trennwänden unterteilt ist. Der Raum zwischen den beiden Trennwänden dient als Frischdampfkondensatsammelraum, während in den unteren, unter der unteren Trennwand liegenden Raum Frischdampf zugeführt wird. Durch diese Ausgestaltung entfällt eine gesonderte Ausbildung eines Ansatzes am oberen Ende des Behälters. Dort muß dann lediglich eine Würzeaustrittsöffnung vorhanden sein.

Gemäß dem ersten Ausführungsbeispiel wird darüber hinaus auch der Vorteil erreicht, daß der dort am oberen Aufsatz vorgesehene Kompensator entfallen kann. Dies ist darauf zurückzuführen, daß durch die räumlich zusammengelegte Abführung des Frischdampfkondensats und die Einspeisung des Frischdampfes aufgrund der relativ geringen Temperaturunterschiede zwischen Dampf und Kondensat keine so hohen Temperaturdifferenzen auftreten. Daher ist bei dieser Lösung keine Kompensation erforderlich. Auch die Zwischenwände, insbesondere die obere Zwischenwand, kann durch ein relativ dünnes Metallblech verwirklicht werden, da keine nennenwerten Druckunterschiede zwischen diesen Trennwänden vorliegen. Die Anordnung des Ansatzes erleichtert insgesamt auch die Montage sowie die Inspektion bzw. Wartung des Außenkochers.

In diesem Zusammenhang sieht eine weitere Ausgestaltung der Erfindung vor, daß die obere Zwischenwand mit Öffnungen versehen ist, die konzentrisch zu Öffnungen der unteren Trennwand liegen und daß an den Öffnungen jeweils zugeordnete Frischdampfkondensatsammelrohre enden, die sich jeweils nach oben durch die Leitungsrohre mit Radialabstand erstrecken, wobei die Rohre im Bereich der oberen Trennwand enden und dort verschlossen sind.

Die untere Zwischenwand wird mit Öffnungen versehen, die konzentrisch zu den Öffnungen der oberen Zwischwand liegen und es ist vorgesehen, daß an den Öffnungen jeweils zugeordnete Frischdampfleitungsrohre enden, die sich nach oben durch die Frischdampfkondensatsammelrohre mit Radialabstand erstrecken. Die Frischdampfleitungsrohre sind oben offen und enden mit Abstand zum oberen Ende der Frischdampfkondensatsammelrohre. Durch diese Ausbildung wird mit drei ineinanderliegenden Rohren gearbeitet, wobei zwischen dem äußersten Rohr und dem daran nach innen anschließenden Frischdampfkondensatsammelrohr die Würze hindurch geleitet wird. Im Frischdampfkondensatsammelrohr liegt ein weiteres, oben offenes Frischdampfleitungsrohr, durch das der Frischdampf von unten eingespeist wird und dann am oberen Ende austritt. Da das Frischdampfkondensatsammelrohr das Frischdampfleitungsrohr umgibt und oben geschlossen ist, wird der Frischdampf nach Austritt aus dem Frischdampfleitungsrohr umgelenkt, kondensiert und läuft innen am Frischdampfkondensatsammelrohr wieder nach unten in den zwischen den beiden Zwischenwänden gebildeten Frischdampfkondensatsammelraum, von wo es dann über eine Öffnung abgeleitet wird.

Die Erfindung wird im folgenden anhand der Zeichnung weiter erläutert und beschrieben. Darin zeigt:
- Figur 1: eine schematische Darstellung der erfindungsgemäßen Würzekochvorrichtung,
- Figur 2: einen Längsschnitt durch den erfindungsgemäßen Außenkocher,
- Figur 3: das Detail D₃ der Figur 2,
- Figur 4: das Detail D₄ der Figur 2,
- Figur 5: eine Ansicht von unten auf den entlang der Linie IV-IV der Figur 2 geschnittenen Außenkocher,
- Figur 6: einen Längsschnitt durch ein weiteres Ausführungsbeispiel eines erfindungsgemäßen Außenkochers und
- Figur 7: einen Längsschnitt durch ein einzelnes Leitungsrohrsystem des in Figur 6 dargestellten Außenkochers.

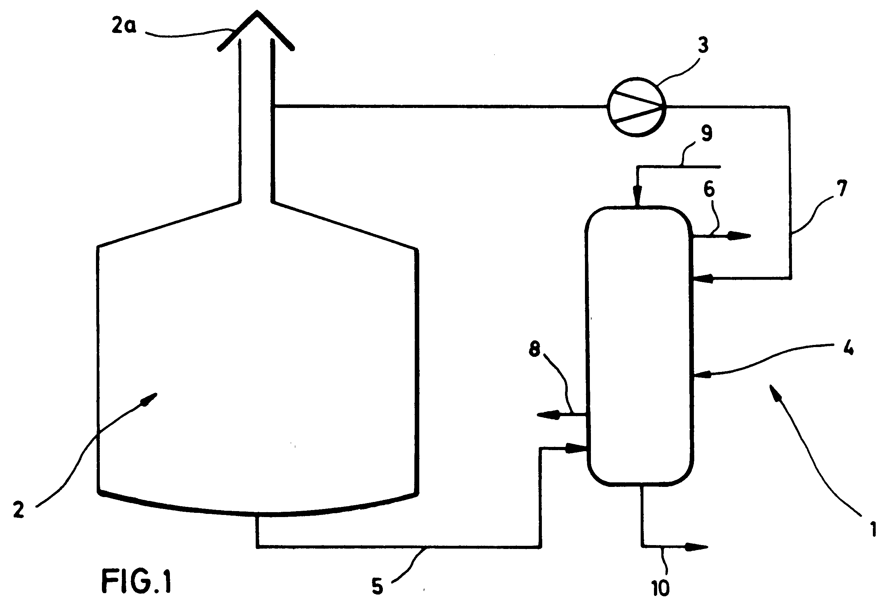

In Figur 1 ist der prinzipielle Aufbau der erfindungsgemäßen Würzekochvorrichtung dargestellt. Die Würzekochvorrichtung ist insgesamt mit 1 bezeichnet und umfaßt eine Würzepfanne 2, die über verschiedene Verbindungsleitungen mit einem Außenkocher 4 in Verbindung steht. Im Außenkocher 4 wird die Würze sowohl aufgeheizt als auch gekocht. Zu diesem Zweck wird die Würze über die Leitung 5 in den Außenkocher eingeleitet und verläßt diesen am oberen Ende über die Leitung 6.

Zum Außenkocher 4 führt eine Frischdampfzulaufleitung 9, über die Frischdampf zum Aufheizen der Würze in den Außenkocher 4 eingeleitet werden kann. Das Frischdampfkondensat verläßt über die Auslaufleitung 10 den Außenkocher. Der Frischdampf durchströmt in noch näher zu erläuternder Weise den Außenkocher 4 in einem eigenen Leitungssystem. Desweiteren steht der Außenkocher 4 mit einer Einlaßleitung 7 in Verbindung, über die mit Hilfe eines Verdichters 3 verdichtete Brüden in den Außenkocher eingeleitet werden können. Das Brüdenkondensat verläßt über die Auslaufleitung 8 den Außenkocher 4.

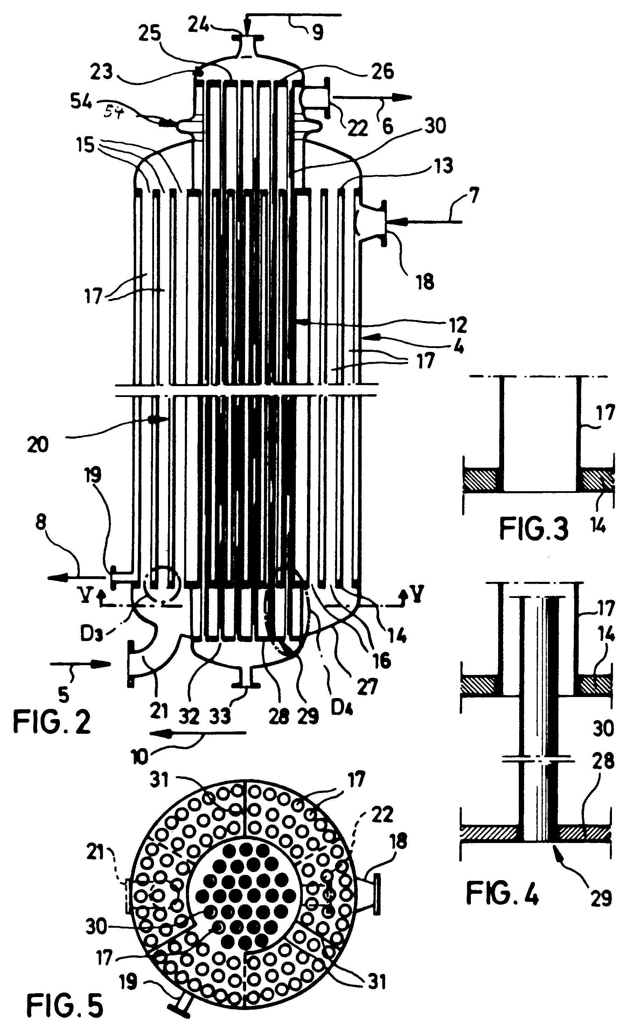

Wie die getrennten Heizkreisläufe im Außenkocher 4 bzw. die beiden Wärmetauscher einmal für Frischdampf und einmal für verdichtete Brüden im Außenkocher 4 verwirklicht sind, zeigt die Längsschnittdarstellung der Figur 2, die im folgenden erläutert wird.

Wie aus der Figur 2 im Zusammenhang mit der Figur 5 erkannt werden kann, ist der Außenkocher 4 als länglicher, aufrechtstehender Rundbehälter ausgebildet. Im Inneren ist der Behälter zunächst im oberen Bereich oberhalb der Eintrittsöffnung 18 für die verdichteten Brüden mit einer horizontal verlaufenden Trennwand 13 versehen. Eine entsprechende erste untere Trennwand 14 ist im unteren Bereich des Behälters 4 unterhalb der Austrittsöffnung 19 für das Brüdenkondensat angeordnet. Diese beiden ersten Trennwände 13 und 14 trennen in dem Behälter einen mittleren Raum 20 von den sich nach oben bzw. unten anschließenden Räumen ab. In der oberen Trennwand 13 sind Durchtrittsöffnungen 15 und in der unteren Trennwand 14 korrespondierende Öffnungen 16 vorhanden. Die Öffnungen 15 und 16 sind durch Rohrleitungen 17 miteinander verbunden. Diese Rohrleitungen 17 ermöglichen es, daß die Würze, die über die Leitung 5 und die Eintrittsöffnung 21 am unteren Teil des Behälters zugeführt wird, durch die Trennwände 14 bzw. 13 hindurch in den Leitungsrohren 17 strömen kann. Die dann dort hindurchströmende Würze wird gekocht, wenn über die Eintrittsöffnung 18 verdichtete Brüden in den mittleren Raum 20 eingeleitet werden. Diese Brüden umspülen die Leitungsrohre 17, geben dabei Wärme ab, kondensieren und treten an der Austrittsöffnung 19 wieder aus dem Außenkocher 4 aus. Auf diese Art und Weise ist der Brüdendampfwärmetauscher 11 verwirklicht.

Der Behälter 4 weist desweiteren an seinem oberen Ende einen Behälteraufsatz 23 auf, an dem die Würzeaustrittsöffnung 22 ausgebildet ist. Oberhalb der Würzeaustrittsöffnung 22 ist eine zweite obere Trennwand 25 vorhanden, die ihrerseits ebenfalls mit Öffnungen 26 versehen ist. Der Behälteraufsatz ist zur Kompensation von unterschiedlichen Ausdehnungen mit einem Kompensator 54 versehen.

Der Behälterboden 27 wird nach unten hin durch eine zweite, untere Trennwand 28 über einen Bereich symmetrisch zur Längsmittelachse A des Außenkochers 4 abgeschlossen, wobei in dieser zweiten unteren Trennwand 28 ebenfalls Öffnungen 32 vorhanden sind. Zwischen den Öffnungen 26 in der zweiten oberen Trennwand 25 und den Öffnungen 32 in der zweiten unteren Trennwand 28 verlaufen ebenfalls Rohrleitungen 30, die vom Frischdampf, der über die Leitung 9 und den Frischdampfeinlaß 24 am oberen Ende des Behälteraufsatzes 23 eingeleitet wird, durchströmt werden, dabei kondensieren und in den sich an die untere Trennwand 28 nach unten anschließenden Kondensatsammelraum 29 als Frischdampfkondensat sammeln. Das Frischdampfkondensat wird dann über den Auslaß 33 in die Kondensatleitung 10 eingeleitet.

In der Figur 3 ist in der Detaildarstellung D₃ zu erkennen, daß die Würzeleitungsrohre 17 in den Öffnungen der unteren Trennwand 14 befestigt sind. Entsprechendes gilt für die obere Trennwand 13.

Wie weiterhin Figur 4 erkennen läßt, werden die im inneren Teil des Außenkochers 4 verlaufenden Würzeleitungsrohre 17 von den Frischdampfleitungsrohren 30 durchsetzt. Der Durchmesser der Frischdampfleitungsrohre 30 ist so bemessen, daß die Würze ohne zu großen Strömungswiderstand auch die von den Frischdampfleitungsrohren 30 durchsetzten Würzeleitungsrohre 17 durchströmen kann.

Durch die Abtrennung mit Hilfe der zweiten Trennwände 25 und 28 und der zwischen diesen Trennwänden verlaufenden Frischdampfleitungen wird der zweite Wärmetauscher 12 gebildet, wobei das Heizmedium, nämlich der Frischdampf, ohne Berührung mit dem Brüdenkondensat in einem eigenen Heizkreislauf, nämlich durch die Rohre 30 den Außenkocher durchsetzt, so daß das Frischdampfkondensat, welches über die Leitung 10 erhalten wird, weiterverwertet werden kann.

In Figur 5 ist es desweiteren zu erkennen, daß in dem Außenkocher 4 auch vertikal gerichtete Leitwände 31 vorhanden sind, die die am Einlaß 21 eintretende Würze auf einem möglichst langen Weg durch den Außenkocher 4 leiten.

Die Leitwände sind aufgrund der konzentrisch ineinanderliegenden Anordnung der Wärmetauscher einfach anzuordnen und zu fertigen, weil identische Teile verwendet werden können.

Mit der erfindungsgemäßen Würzekochvorrichtung kann wie folgt gearbeitet werden.

Die Aufheizung der Würze erfolgt durch Umpumpen der Würze aus der Pfanne 2 mit Hilfe einer nicht näher dargestellten Pumpe in den Außenkocher 4. Im Außenkocher 4 wird Frischdampf 9 über die Leitung 9 und den Einlaß 24 eingeleitet, der dann gleichmäßig die Rohre 30 nach unten durchläuft, seine Wärme an die Würze abgibt und dabei kondensiert. Im Kondensatsammelraum 29 sammelt sich das Frischdampfkondensat und verläßt über die Leitung 10 dann den Außenkocher und kann dann weiterverwertet werden. Die aufgeheizte Würze wird über den Auslaß 6 in die Pfanne 7 zurückgefördert und zirkuliert solange zwischen dem Außenkocher 4 und der Pfanne 2 bis sie annähernd Siedetemperatur erreicht hat. Durch die zunehmende Aufheizung der Würze entstehen in der Pfanne 2 Brüden. Bei genügendem Brüdenanfall in der Pfanne 2 schaltet sich der Verdichter ein und die Dunstrohrklappe 2a in der Pfanne 2 schließt. Der mit Hilfe des Verdichters 3 verdichtete Brüden wird dann über die Leitung 7 in den Außenkocher 4 eingeleitet und übernimmt dann zusehens die Beheizung der weiter zirkulierenden Würze. Der verdichtete Brüden kondensiert beim Umströmen der Würzeleitungsrohre 7 im mittleren Raum 20 des Außenkochers 4. Das Brüdenkondensat kann dann über den Auslaß 19 und die Leitung 8 entnommen und beispielsweise zur Bereitung von Warmwasser oder dergl. weiterverwertet werden.

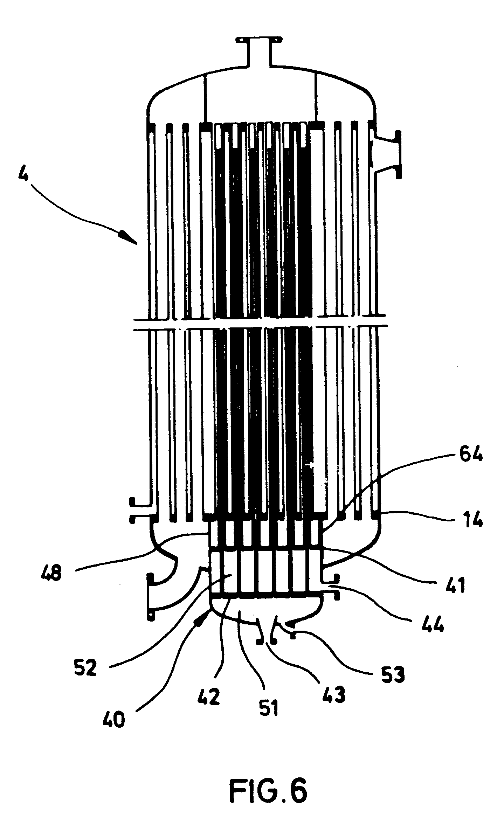

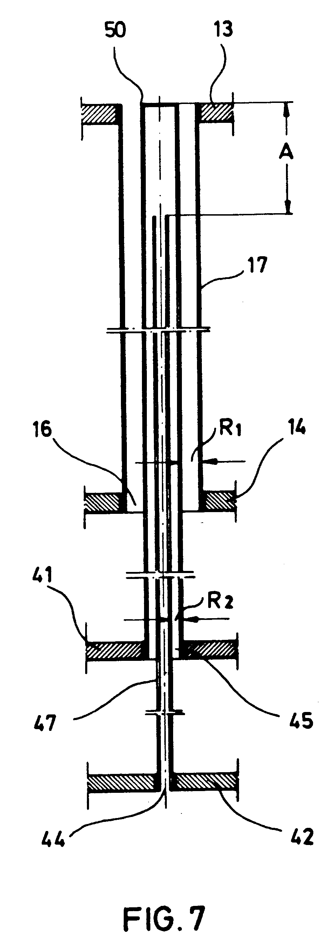

In der Figur 6 ist ein weiteres Ausführungsbeispiel eines Außenkochers 4 dargestellt. Bei diesem Außenkocher findet die Frischdampfzufuhr sowie die Ableitung des Frischdampfkondensats mit Hilfe eines am unteren Ende des Behälters angeordneten Ansatzes 40 statt. Dieser Ansatz ragt mit einer zylindrischen Mantelfläche 48 von unten durch den Behälterboden bis zur unteren Trennwand 14 und ist abdichtend an dieser Trennwand 14 ringsum befestigt. In dem Ansatz befinden sich eine obere Zwischenwand 41 sowie eine untere Zwischenwand 42. Unterhalb der unteren Zwischenwand 42 ist der Ansatz 40 verschlossen und mit einem Frischdampfzulauf 43 versehen. In der oberen Zwischenwand 41 sind Öffnungen 45 ausgebildet, die konzentrisch zu den Öffnungen 16 der unteren Trennwand 14 liegen (vgl. Figur 7). Diese Kondensatsammelrohre 46 erstrecken sich jeweils in die zugeordneten Leitungsrohre 17 hinein und enden etwa im Bereich der oberen Trennwand 13. Am oberen Ende 50 sind die Frischdampfkondensatsammelrohre 46 verschlossen.

In der unteren Zwischenwand 42 sind ebenfalls konzentrisch zu den Öffnungen 45 und 16 der oberen Zwischenwand und der unteren Trennwand Öffnungen vorhanden, in denen Frischdampfleitungsrohre 47 beginnen, die sich in die Kondensatleitungsrohre 46 hinein erstrecken und in einem Abstand A zum oberen Ende 50 der Frischdampfkondensatsammelrohre enden.

Die Durchmesser der ineinanderverlaufenden Rohre sind so gewählt, daß zwischen dem Leitungsrohr 17 und dem nächst innenliegenden Frischdampfkondensatleitungsrohr 46 ein ausreichender radialer Abstand R₁ und ebenso zwischen dem Frischdampfleitungsrohr 47 und dem Frischdampfkondensatleitungsrohr 46 ein entsprechend ausreichender Radialabstand R₂ gegeben ist, damit ein entsprechender Durchtritt der Würze bzw. des Frischdampfkondensats möglich ist.

Der Betrieb dieses Außenkochers erfolgt in Analogie zu der anhand des ersten Ausführungsbeispiels beschriebenen Arbeitsweise, wobei jedoch der Frischdampf unten über die Öffnung 43 eingeleitet wird. Der Frischdampf wird dabei in dem Raum 51 verteilt und tritt gleichmäßig unten über die Öffnungen 49 in die Frischdampfleitungsrohre 47 ein. Dort steigt er dann bis zum oben offenen Ende der jeweiligen Frischdampfleitungsrohre auf und wird durch das verschlossene Ende 50 des Frischdampfkondensatsammelrohrs umgelenkt, wobei dann das Frischdampfkondensat zwischen der Außenwand der Frischdampfleitungsrohre 47 und der Innenwand der Frischdampfkondensatsammelrohre nach unten in den Kondensatsammelraum 52, der zwischen der oberen Zwischenwand 41 und der unteren Zwischenwand 42 liegt, einläuft. Dort ist ein seitlicher Frischdampfkondensatauslaß 44 vorgesehen, durch den das Kondensat dann ablaufen kann. In dem Frischdampfverteilerraum 51 ist ein weiterer Frischdampfkondensatablauf 53 vorgesehen, um auch dort den kondensierten Frischdampf ausleiten zu können.

Das Aufheizen der Würze geschieht dann in Analogie zu dem zuerst beschriebenen Ausführungsbeispiel dadurch, daß die Würze zwischen den Leitungsrohren 17 und den Frischdampfkondensatleitungsrohren 46 den Außenkocher durchläuft und dabei aufgeheizt wird. Die sich zwischen der unteren Trennwand 14 und der oberen Zwischenwand 41 sammelnde Würze tritt seitlich durch geeignete Öffnungen 64 aus dem Zylindermantel des Ansatzes 14 in den radial äußeren Teil des Außenkochers aus.

Selbstverständlich können die erfindungsgemäßen Außenkocher nicht nur in stehender Anordnung, sondern auch in liegender Anordnung eingesetzt werden.

## Patentansprüche

1. Würzekochvorrichtung, die mit Brüdenverdichtung arbeitet, mit einer Würzepfanne und mit zwei getrennten, außerhalb der Würzepfanne gelegenen und von Wärmetauschern gebildeten Heizungskrisläufen, wobei der eine Wärmetauscher (Frischdampfwärmetauscher) zum Aufheizen der Würze mit Frischdampf und der andere Wärmetauscher (Brüdenwärmetauscher) zum Kochen der Würze mit verdichteten Brüden gespeist wird,
dadurch **gekennzeichnet**,
daß die beiden Wärmetauscher (11, 12) ineinanderliegend in einem gemeinsamen Außenkocher (4) angeordnet sind.

2. Vorrichtung nach Anspruch 1,
dadurch **gekennzeichnet**,
daß der Außenkocher (4) als aufrechtstehender, länglicher Rundbehälter ausgebildet ist, an dessen unterem Ende ein Einlaß (21) und an dessen oberem Ende in Auslaß (22) für die Würze ausgebildet ist, wobei die Würze auf dem Weg vom Einlaß zum Auslaß mit Wärmetauscherflächen der beiden Wärmetauscher (11, 12) in Berührung kommt.

3. Vorrichtung nach Anspruch 2,
dadurch **gekennzeichnet**,
daß der Außenkocher (4) in seinem oberen Bereich mit einer ersten, oberen und sich horizontal erstreckenden Trennwand (13) und in seinem unteren Bereich mit einer ersten, unteren und sich horizontal erstreckenden Trennwand (14) versehen ist, wobei die Trennwände (13, 14) einen mittleren Raum (20) begrenzen und daß in den Trennwänden (13, 14) eine Vielzahl von Öffnungen (15, 16) vorhanden sind, wobei jeweils von einer Öffnung in der ersten oberen Trennwand (13) zu einer entsprechenden Öffnung in der ersten unteren Trennwand (14) eine den mittleren Raum (20) durchsetzende Würzeleitung (20) zum Durchtritt der Würze führt.

4. Vorrichtung nach Anspruch 3,
dadurch **gekennzeichnet**,
daß am oberen Bereich des mittleren Raumes (20) eine seitliche Eintrittsöffnung (18) für Brüdendampf und am unteren Bereich des mittleren Raumes (20) eine seitliche Auslaßöffnung (19) für Brüdenkondensat vorhanden ist.

5. Vorrichtung nach Anspruch 3 oder 4,
dadurch **gekennzeichnet**,
daß der Außenkocher(4) oberhalb der ersten oberen Trennwand (13) mit einer zweiten oberen Trennwand (25) und unterhalb der ersten unteren Trennwand (14) mit einer zweiten unteren Trennwand (28) versehen ist, die beide horizontal verlaufen und daß zwischen korrespondierenden Öffnungen (26, 32) der beiden zweiten Trennwände (25, 28) Frischdampfleitungen (30) verlaufen, die durch den mittleren Raum hindurch in den Würzleitungen (17) mit kleinerem Durchmesser als die Würzeleitungen verlaufen.

6. Vorrichtung nach Anspruch 5,
dadurch **gekennzeichnet**,
daß die obere zweite Trennwand (25) oberhalb der Mündung des Auslasses (22) für die Würze und die zweite untere Trennwand (28) unterhalb der Mündung des Einlasses (21) für die Würze verläuft.

7. Vorrichtung nach wenigstens einem der Ansprüche 2 bis 6,
dadurch **gekennzeichnet**,
daß der Außenkocher (4) am oberen Ende mit einem Behälteraufsatz (23) versehen ist, in dem die zweite obere Trennwand (25) und die Würzeaustrittsöffnung (22) angeordnet ist.

8. Vorrichtung nach wenigstens einem der Ansprüche 2 bis 7,
dadurch **gekennzeichnet**,
daß der Außenkocher (4) an seinem unteren Ende durch die zweite, untere Trennwand (28) abgeschlossen ist, wobei sich an die Trennwand nach unten hin ein Kondensatsammelraum (29) mit einem Kondensatauslaß (33) anschließt.

9. Vorrichtung nach wenigstens einem der vorangegangenen Ansprüche,
dadurch **gekennzeichnet**,
daß in dem Außenkocher (4) vertikal gerichtete Leitwände (31) vorhanden sind, die so angeordnet sind, daß die Würze einen möglichst langen Weg von der Würzeeintrittsöffnung (21) zur Würzeaustrittsöffnung (22) durchläuft.

10. Vorrichtung nach Anspruch 5,
dadurch **gekennzeichnet**,
daß der Durchmesser der beiden zweiten Trennwände (25, 28) etwa dem halben Durchmesser der beiden ersten Trennwände (13, 14) entspricht, und daß der Behälteraufsatz (23) und der Kondensatsammelraum (29) symmetrisch zur Längsmittelachse (A-A) des Behälters (4) angeordnet sind.

11. Vorrichtung nach Anspruch 5,
dadurch **gekennzeichnet**,
daß die Würzeleitungen (17) und die Frischdampfleitungen (30) als Rundröhren ausgebildet sind.

12. Vorrichtung nach Anspruch 8,
dadurch **gekennzeichnet**,
daß der Boden des Kondensatsammelraumes für den Frischdampf bombiert ist.

13. Vorrichtung nach Anspruch 3,
dadurch **gekennzeichnet**,
daß am unteren Ende des Außenkochers (4) ein Ansatz (40) ausgebildet ist, der mit einer zylindrischen Mantelfläche (48) bis zur unteren Trennwand (14) in den Außenkocher hineinragt, wobei der Ansatz (40) durch eine obere Zwischenwand (41) und eine untere Zwischenwand (42) horizontal unterteilt und mit einem Frischdampfzulauf (43) und einem Frischdampfkondensatablauf (44) versehen ist.

14. Vorrichtung nach Anspruch 13,
dadurch **gekennzeichnet**,
daß die obere Zwischenwand (41) mit Öffnungen (45) versehen ist, die konzentrisch zu den Öffnungen (16) der unteren Trennwand (14) liegen und daß an den Öffnungen (45) jeweils zugeordnete Frischdampfkondensatsammelrohre (46) enden, die sich jeweils nach oben durch die Leitungsrohre (17) mit Radialabstand (R₁) erstrecken, wobei die Frischdampfkondensatsammelrohre (46) im Bereich der oberen Trennwand (13) enden und dort verschlossen sind.

15. Vorrichtung nach Anspruch 14,
dadurch **gekennzeichnet**,
daß die untere Zwischenwand (42) mit Öffnungen (49) versehen ist, die konzentrisch zu den Öffnungen (45) der oberen Zwischenwand (41) liegen und daß an den Öffnungen jeweils zugeordnete Frischdampfleitungsrohre (47) enden, die sich nach oben durch die Frischdampfkondensatsammelrohre (46) mit Radialabstand (R₂) erstrecken und daß die Frischdampfleitungsrohre oben offen sind und mit Abstand (A) zum oberen Ende der Frischdampfkondensatsammelrohre enden.

## Claims

1. Wort boiling device, which works by vapour compression, having a wort copper and having two separate heating circuits situated outside the wort copper and formed by heat exchangers, the one heat exchanger (live steam heat exchanger) being supplied with live steam for heating up the wort and the other heat exchanger (vapour heat exchanger) being supplied with compressed vapours for boiling the wort, characterised in that the two heat exchangers (11, 12) are disposed lying one inside the other in a common external boiler (4).

2. Device according to Claim 1, characterised in that the external boiler (4) is configured as an upright, oblong round-container, at the lower end of which there is configured an inlet (21) and at the upper end of which there is configured an outlet (22) for the wort, the wort, on the path from the inlet to the outlet, coming into contact with heat exchanger surfaces of the two heat exchangers (11, 12).

3. Device according to Claim 2, characterised in that the external boiler (4) is provided, in its upper area, with a first, upper and horizontally extending partition (13) and, in its lower area, with a first, lower and horizontally extending partition (14), the partitions (13, 14) limiting a central chamber (20), and in that a plurality of openings (15, 16) are present in the partitions (13, 14), a wort conduit (20) for the passage of the wort, which wort conduit passes through the central chamber (20), leading in each case from an opening in the first upper partition (13) to a corresponding opening in the first lower partition (14).

4. Device according to Claim 3, characterised in that a lateral intake opening (18) for vapour steam is present at the upper area of the central chamber (20) and a lateral outlet opening (19) for vapour condensate is present at the lower area of the central chamber (20).

5. Device according to Claim 3 or 4, characterised in that the external boiler (4) is provided above the first upper partition (13) with a second upper partition (25) and below the first lower partition (14) with a second lower partition (28), both of which run horizontally, and in that running between corresponding openings (26, 32) of the two second partitions (25, 28) there are live steam conduits (30), which run through the central chamber in the wort conduits (17) and are of smaller diameter than the wort conduits.

6. Device according to Claim 5, characterised in that the upper second partition (25) runs above the mouth of the outlet (22) for the wort and the second lower partition (28) runs below the mouth of the inlet (21) for the wort.

7. Device according to at least one of Claims 2 to 6, characterised in that the external boiler (4) is provided at the upper end with a container cap (23), in which there is disposed the second upper partition (25) and the wort discharge opening (22).

8. Device according to at least one of Claims 2 to 7, characterised in that the external boiler (4) is closed off at its lower end by the second, lower partition (28), a condensate collecting chamber (29) having a condensate outlet (33) adjoining the partition in the downward direction.

9. Device according to at least one of the preceding claims, characterised in that present in the external boiler (4) there are vertically directed baffles (31), which are disposed such that the wort traverses the longest possible path from the wort intake opening (21) to the wort discharge opening (22).

10. Device according to Claim 5, characterised in that the diameter of the two second partitions (25, 28) corresponds to approximately half the diameter of the two first partitions (13, 14) and in that the container cap (23) and the condensate collecting chamber (29) are disposed symmetrically to the longitudinal centre axis (A-A) of the container (4).

11. Device according to Claim 5, characterised in that the wort conduits (17) and the live steam conduits (30) are configured as round tubes.

12. Device according to Claim 8, characterised in that the base of the condensate collecting chamber for the live steam is bomb-shaped.

13. Device according to Claim 3, characterised in that at the lower end of the external boiler (4) there is configured a projection (40), which protrudes with a cylindrical contacting surface (48) into the external boiler, as far as the lower partition (14), the projection (40) being horizontally divided by an upper intermediate wall (41) and a lower intermediate wall (42) and being provided with a live steam inflow (43) and a live steam condensate outflow (44).

14. Device according to Claim 13, characterised in that the upper partition (41) is provided with openings (45), which are situated concentrically to the openings (16) of the lower partition (14), and in that ending at the openings (45) there are respectively assigned live steam condensate collecting pipes (46), which respectively extend upwards through the conduit pipes (17) at a radial distance (R₁), the live steam condensate collecting pipes (46) ending in the area of the upper partition (13) and being sealed off there.

15. Device according to Claim 14, characterised in that the lower partition (42) is provided with openings (49), which are situated concentrically to the openings (45) of the upper partition (41), and in that ending at the openings there are respectively assigned live steam conduit pipes (47), which extend upwards through the live steam condensate collecting pipes (46) at a radial distance (R₂), and in that the live steam conduit pipes are open at the top and end at a distance (A) from the upper end of the live steam condensate collecting pipes.

## Revendications

1. Dispositif pour faire bouillir du moût fonctionnant avec une compression de buées, comprenant une bassine à moût et deux circuits de chauffage séparés situés en dehors de la bassine à moût et constitués par des échangeurs de chaleur, l'un desdits échangeurs de chaleur (échangeur de chaleur à vapeur fraîche) étant alimenté en vapeur fraîche pour l'échauffement du moût et l'autre échangeur de chaleur (échangeur de chaleur à buées) étant alimenté en buées comprimées pour porter le moût à ébullition, **caractérisé en ce** que les deux échangeurs de chaleur (11, 12) sont logés, emboîtés l'un dans l'autre, dans une chaudière extérieure (4) commune.

2. Dispositif selon la revendication 1, caractérisé en ce que la chaudière extérieure (4) est conformée en réservoir allongé de section circulaire en position debout donc l'extrémité inférieure comporte une entrée (21) et dont l'extrémité supérieure est munie d'une sortie (22) pour le moût, ledit moût entrant en contact, sur le chemin de l'entrée à la sortie, avec les surfaces d'échange de chaleur des deux échangeurs de chaleur (11, 12).

3. Dispositif selon la revendication 2, caractérisé en ce que la chaudière extérieure (4) est munie dans sa partie supérieure d'une première cloison supérieure (13) d'extension horizontale et, dans sa partie inférieure, d'une première cloison inférieure (14) d'extension horizontale, les cloisons (13, 14) délimitant un volume médian (20), et que les cloisons (13, 14) sont pourvues d'une multiplicité d'ouvertures (15, 16), une conduite (20) pour le passage du moût qui traverse le volume médian (20) passant respectivement d'une ouverture dans la première cloison supérieure (13) à une ouverture correspondante dans la première cloison inférieure (14).

4. Dispositif selon la revendication 3, caractérisé en ce qu'il comprend, dans la partie supérieure du volume médian (20), un orifice d'entrée latéral (18) pour la vapeur chaude et, dans la partie inférieure du volume médian (20), un orifice de sortie latéral (19) pour le condensat de buées.

5. Dispositif selon l'une des revendications 3 ou 4, caractérisé en ce que la chaudière extérieure (4) est munie, au-dessus de la première cloison supérieure (13), d'une seconde cloison supérieure (25) et, au-dessous de la première cloison inférieure (14), d'une seconde cloison inférieure (28) qui s'étendent toutes deux dans le sens horizontal, et qu'entre des ouvertures (26, 32) correspondantes des deux secondes cloisons (25, 28) s'étendent des conduites de vapeur fraîche (30) qui traversent le volume médian dans les conduites de moût (17), avec un diamètre inférieur à celui desdites conduites de moût.

6. Dispositif selon la revendication 5, caractérisé en ce que la seconde cloison supérieure (25) se situe au-dessus de l'embouchure de la sortie (22) pour le moût et que la seconde cloison inférieure (28) se trouve en dessous de l'embouchure de l'entrée (21) pour le moût.

7. Dispositif selon l'une quelconque des revendications 2 à 6, caractérisé en ce que la chaudière extérieure (4) est équipée à l'extrémité supérieure d'un chapeau (23) dans lequel sont disposés la seconde cloison supérieure (25) et l'orifice de sortie de moût (22).

8. Dispositif selon l'une quelconque des revendications 2 à 7, caractérisé en ce que la chaudière extérieure (4) est fermée à son extrémité inférieure par la seconde cloison inférieure (28), ladite cloison étant suivie vers le bas d'un collecteur de condensat (29) avec une sortie de condensat (33).

9. Dispositif selon l'une quelconque des revendications précédentes, caractérisé en ce qu'à l'intérieur de la chaudière extérieure (4) sont installées des parois déflectrices (31) orientées verticalement et disposées de telle façon que le moût parcourt un chemin aussi long que possible entre l'orifice d'entrée de moût (21) et l'orifice de sortie de moût (22).

10. Dispositif selon la revendication 5, caractérisé en ce que le diamètre des deux secondes cloisons (25, 28) correspond sensiblement à la moitié du diamètre des deux premières cloisons (13, 14) et que le chapeau (23) du réservoir et le collecteur de condensat (29) sont disposés symétriquement par rapport à l'axe longitudinal médian (A-A) du réservoir (4).

11. Dispositif selon la revendication 5, caractérisé en ce que les conduites de moût (17) et les conduites de vapeur fraîche (30) sont conformées en tubes ronds.

12. Dispositif selon la revendication 8, caractérisé en ce que le fond du collecteur de condensat pour la vapeur fraîche est bombé.

13. Dispositif selon la revendication 3, caractérisé en ce qu'à l'extrémité inférieure de la chaudière extérieure (4) est conformée une embase (40) qui dépasse avec une surface latérale cylindrique (48) jusqu'à la cloison inférieure (14) dans la chaudière extérieure, l'embase (40) étant subdivisée dans le sens horizontal par une paroi intermédiaire supérieure (41) et une paroi intermédiaire inférieure (42) et pourvue d'une arrivée de vapeur fraîche (43) et d'un écoulement de condensat de vapeur fraîche (44).

14. Dispositif selon la revendication 13, caractérisé en ce que la paroi intermédiaire supérieure (41) est munie d'ouvertures (45) qui sont disposées concentriquement par rapport aux ouvertures (16) dans la cloison inférieure (14), et qu'auxdites ouvertures (45) se terminent à chaque fois des tuyaux collecteurs de condensat de vapeur fraîche (46) associés qui s'étendent respectivement à une distance radiale (R₁) vers le haut, au travers des conduites (17), les tuyaux collecteurs de condensat de vapeur fraîche (46) se terminant dans la région de la cloison supérieure (13) où ils sont obturés.

15. Dispositif selon la revendication 14, caractérisé en ce que la paroi intermédiaire inférieure (42) est munie d'ouvertures (49) qui sont disposées concentriquement par rapport aux ouvertures (45) dans la paroi intermédiaire supérieure (41) et qu'auxdites ouvertures se terminent à chaque fois des conduites de vapeur fraîche (47) associées qui s'étendent à une distance radiale (R₂) vers le haut, au travers des tuyaux collecteurs de condensat de vapeur fraîche (46), et que les conduites de vapeur fraîche sont ouvertes en haut et se terminent à la distance (A) de l'extrémité supérieure des tuyaux collecteurs de condensat de vapeur fraîche.
